# EUROPÄISCHE PATENTANMELDUNG

(11) **EP 1 122 958 A1**
(43) Veröffentlichungstag der Anmeldung: **08.08.2001**
(21) Anmeldenummer: 00102074.2
(22) Anmeldetag: 02.02.2000
(51) Int. Cl.: H04Q 7/22, H04M 3/533

(54) **Verfahren zur Übermittlung einer Nachricht sowie Telekommunikationssystem**

(71) Anmelder: SIEMENS AKTIENGESELLSCHAFT, 80333 München (DE)
(72) Erfinder: Bruchertseifer, Jörg, 86156 Augsburg (DE); Lucassen, Helmut, 48703 Stadtlohn (DE); van de Logt, Marco, 47574 Goch (DE); Watzke, Jörn, 81377 München (DE)

(57) **Zusammenfassung**

Verfahren zur Übermittlung einer Nachricht von einem ersten zu einem zweiten Telekommunikations-Endgerät (CD), von denen mindestens eines an ein leitungsgebundenes Telefonnetz (PSTN) angeschlossen ist, bei dem die Nachricht als Kurznachricht in das Short-Message-Format gebracht, über eine adäquat spezifizierte Datenverbindungs-Schicht (DL) ein logischer Verbindungsaufbau realisiert und die Kurznachricht im Short-Message-Format in einer adäquat spezifizierten physikalischen Schicht über DTMF- oder FSK-Off-Hook-Signalisierung an ein Short-Message-Dienstzentrum (SMSC) und von diesem zum zweiten Telekommunikations-Endgerät übertragen wird.

## Beschreibung

Die Erfindung betrifft ein Verfahren zur Übermittlung einer Nachricht von einem ersten zu einem zweiten Telekommunikations-Endgerät, von denen mindestens eines an ein leitungsgebundenes Telefonnetz angeschlossen ist, sowie ein Telekommunikationssystem zur Durchführung dieses Verfahrens.

In nach dem GSM-Standard arbeitenden Mobilfunknetzen hat sich neben der - natürlich bei weitem dominierenden - Sprachkommunikation, insbesondere mit Blick auf erhebliche Kostenvorteile, die Kommunikation mittels kurzer Kurznachrichten (Short Messages) auf der Grundlage des hierfür geschaffenen Standards erfolgreich etabliert. Neben den Kostenvorteilen hat die Nachrichtenübertragung per SMS (Short Message Service) in bestimmten Anwendungsfällen auch Gebrauchswertvorteile. So sind Empfang und Absendung einer SMS ohne akustische Belästigung für die Umgebung realisierbar, und die Übermittlung von Kurznachrichten bietet gegenüber der Sprachkommunikation auch zusätzliche Ausdrucks- und psychologische Akzentuierungsmöglichkeiten.

Bei SMS handelt es sich um einen Punkt-Zu-Punkt-Kurznachrichtendienst, der im Rahmen der GSM-Protokollarchitektur auf der Signalisierungsebene realisiert wird. Er umfaßt den Transport paketorientierter Nutzdaten von und zu Mobilstationen. Die Kurznachrichten werden stets über ein Short-Message-Dienstzentrum (SM SC = Short Message Service Center) im Store-and-Forward-Betrieb transportiert. Das Dienstzentrum nimmt die maximal 160 Zeichen langen Kurznachrichten von einer Mobilstation als Telekommunikations-Endgerät entgegen und leitet sie an ein zweites Telekommunikations-Endgerät - eine weitere Mobilstation oder auch ein Faxgerät o. ä. - weiter.

Zur Realisierung dieses Dienstes definiert der GSM-Standard eine spezielle Protokollarchitektur. Diese ist in den ETSI-Spezifikationen festgelegt und wird in der Literatur hinreichend beschrieben (vgl. etwa J. Eberspächer, H. J. Vögel: "GSM Global System for mobile communication", Stuttgart, 1997), so daß eine genauere Beschreibung hier entbehrlich ist und auf das anhängende Normen-/Dokumentenverzeichnis verwiesen werden kann.

In den bestehenden öffentlichen leitungsgebundenen Telefonnetzen ist eine derartige Übertragung von Kurznachrichten zwischen normalen Telekommunikations-Endgeräten (z. B. Telefonen) derzeit nicht möglich.

Der Erfindung liegt daher die Aufgabe zugrunde, ein Verfahren sowie ein Telekommunikationssystem anzugeben, die die Übermittlung von Kurznachrichten nach dem Vorbild des SMS in einem leitungsgebundenen Telefonnetz (Festnetz) ermöglichen.

Diese Aufgabe wird hinsichtlich ihres Verfahrensaspektes durch ein Verfahren mit den Merkmalen des Anspruchs 1 und hinsichtlich ihres Anordnungsaspektes durch ein Telekommunikationssystem mit den Merkmalen des Anspruchs 2 gelöst.

Die Erfindung schließt den grundlegenden Gedanken ein, ohne Rücksicht auf die tiefgreifenden Systemunterschiede zwischen Mobilfunknetzen einerseits und den bekannten leitungsgebundenen Netzen (Festnetzen) andererseits die bewährte SMS-Protokollarchitektur des GSM-Standards (bzw. auch eine vergleichbare Architektur des UMTS-Standards) auf das Festnetz gewissermaßen abzubilden und auszuweiten.

Mit den nachfolgend beschriebenen Spezifikationen definiert die Erfindung das Übertragungsprotokoll und die physikalischen und administrativen Voraussetzungen zur Übertragung von Kurznachrichten im Short-Message(SMS)-Format zwischen dem Endgerät und dem Short-Message-Dienstzentrum. Das Übertragungsprotokoll wird hierbei bevorzugt in enger Anlehnung an das beim GSM-Standard definierte Protokoll festgelegt. Hiermit wird das Ziel verfolgt, die Übermittlung von Kurznachrichten als für das Festnetz neuen Dienst mit geringem Aufwand und hoher Kompatibilität mit bestehenden Systemen anzubieten. Es wird ein einheitliches SMS-Format im GSM-Netz und im Festnetz verwendet, wodurch die reibungslose Übermittlung von Short Messages zwischen einem nach dem GSM-Standard aufgebauten und betriebenen Mobilfunknetz und dem erfindungsgemäß ausgerüsteten Festnetz gewährleistet wird. Zudem bietet der mit dieser Ausführung der Erfindung eingeschlagene Weg den erheblichen praktischen Vorteil, daß in der Spezifikation des SMS-Dienstes weitestgehend auf die anerkannten und mittlerweile erprobten und bewährten GSM-Spezifikationen zurückgegriffen werden kann.

In der physikalischen Schicht erfolgt die Datenübertragung zwischen Endgerät und Dienstzentrum mittels DTMF-Signalisierung und/oder über eine nach ETS 300 659-1 und ETS 300 659-2 spezifizierte FSK(Frequency Shift Keaing - Frequenzumtastkodierung) Off-Hook-Signalisierung. Diese genannten Übertragungsverfahren können in beliebigen Kombinationen eingesetzt werden. Insbesondere kann das Endgerät eine Signalisierung mittels DTMF vornehmen und das Dienstzentrum kann die FSK-Modulation nutzen, wobei natürlich die jeweils empfangende Einheit für das angewandte Verfahren angepaßt sein muß.

Oberhalb der physikalischen Schicht ist eine Datenverbindungs-Schicht (Data-Link-Layer) spezifiziert, die den logischen Verbindungsaufbau und das Aufsetzen auf den Standard GSM-SMS gewährleistet. Der letztere Standard ist insbesondere in den ETSI-Dokumenten GSM04.07 (ETS 300 556), GSM04.11 und GSM03.40 definiert. In Kompatibilität hierzu kann der Data-Link-Layer in Anpassung an die konkreten Anforderungen frei definiert werden.

Gemäß einer vorteilhaften Ausprägung der Erfindung sind die neu definierte physikalische Schicht und Datenverbindungs-Schicht mit den bestehenden Schichten (Layern) des GSM-SMS-Protokollsatzes kombiniert. Hierbei handelt es sich um die Short-Message-Transferschicht (Short Message Transfer Layer = SM-TL) gemäß ETSI-Dokument GSM03.40, die Short-Message-Relayschicht (Short Message Relay Layer = SM-RL) nach GSM03.40 und 04.11 sowie die Verbindungsmanagement-Schicht (Connection Management Layer = CM) nach GSM04.11.

In der zuletzt genannten Schicht CM ist speziell eine zusätzliche Nachricht zur Signalisierung des Verbindungszustandes (CP-Connect) definiert, deren Format nach GSM04.07/Kapitel 11 bestimmt ist. Eine spezielle Festlegung gibt es auch hinsichtlich des Formates einer Nachricht in der Data Link Layer DL. Hierauf wird weiter unten genauer eingegangen.

In einer bevorzugten Anwendung der Erfindung ist, wie weiter oben bereits angedeutet, eines der Telekommunikations-Endgeräte an ein nach dem GSM- oder auch dem künftigen UMTS-Standard betriebenes Mobilfunknetz angeschlossen, wobei die Verbindung zwischen beiden Netzen in üblicher Weise durch eine Gateway-Mobilvermittlungsstelle hergestellt wird.

Eine weitere vorteilhafte Anwendung der Erfindung ergibt sich, wenn mindestens eines der Telekommunikations-Endgeräte ein Schnurlostelefon ist, von dem bzw. zu dem die Kurznachricht über eine nach dem DECT-Standard betriebene Feststation oder Nebenstellenanlage in das bzw. aus dem Festnetz übertragen wird. Moderne Schnurlostelefone verfügen über die wichtigsten hartwaremäßigen Voraussetzungen zur Implementierung des vorgeschlagenen Dienstes; insbesondere sind sie in der Regel mit einer geeigneten Anzeigeeinheit und Mitteln zur DTMF-Signalisierung ausgerüstet und zur Erkennung der oben erwähnten FSK-Off-Hook-Signalisierung ausgebildet.

Vorteile und Zweckmäßigkeiten der Erfindung ergeben sich im übrigen aus der nachfolgenden genaueren Beschreibung anhand der Figuren. Von diesen zeigen:
Fig. 1 eine Prinzipskizze eines Telekommunikationssystems gemäß der Erfindung,
Fig. 2 eine Darstellung des Schichtenmodells (SI-Modells) der Konfiguration nach Fig. 1,
Fig. 3 ein Flußdiagramm für einen vom Telekommunikations-Endgerät initiierten Verbindungsaufbau gemäß einer Ausführung der Erfindung,
Fig. 4 ein Flußdiagramm für einen vom Short-Message-Dienstzentrum initiierten Verbindungsaufbau gemäß einer Ausführung der Erfindung,
Fig. 5 eine Darstellung des Aufbaus einer Nachricht zum Start der Prozedur auf der Verbindungsmanagement-Schicht und
Fig. 6 eine Darstellung des Nachrichtenformates auf der Datenverbindungs-Schicht.

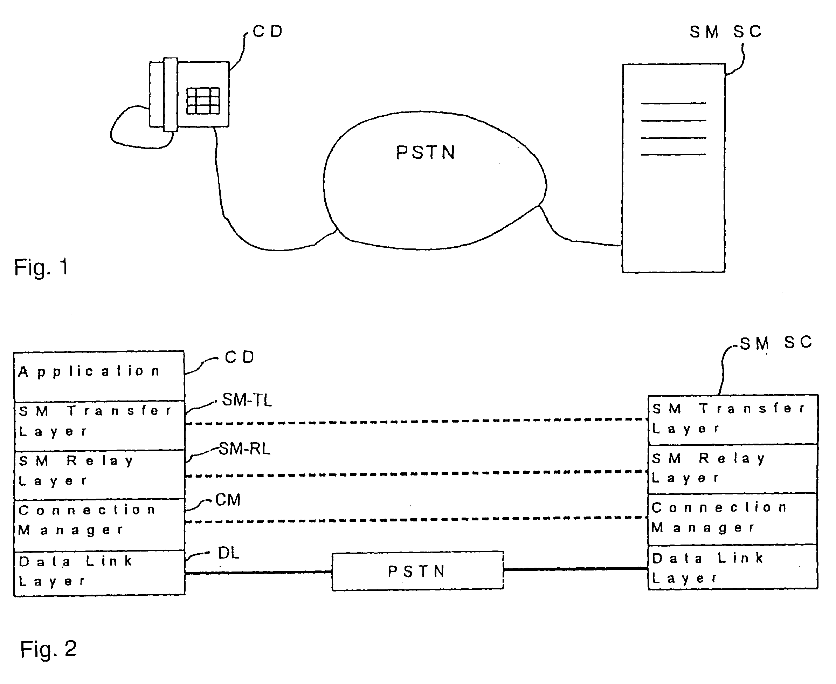

Fig. 1 zeigt schematisch die grundlegenden Komponenten eines erfindungsgemäßen Telekommunikationssystems, nämlich ein öffentliches leitungsgebundenes Fernsprechnetz (Festnetz) PSTN, ein an dieses angeschlossenes Telekommunikations-Endgerät CD und ein ebenfalls an das Festnetz angeschlossenes Short-Message-Dienstzentrum SM SC. Auf das Zusammenspiel dieser Komponenten beziehen sich die nachfolgenden Ausführungen zur Erläuterung der Erfindung.

Fig. 2 zeigt das zugehörige SI-Schichtenmodell, oberhalb der (hier nicht dargestellten) physikalischen Schicht. Die Schichtstruktur umfaßt zunächst eine - weiter unten genauer spezifizierte - Datenverbindungs-Schicht DL (Data Link Layer) und weiterhin die an sich aus dem GSM-SMS-Standard bekannten Schichten Verbindungsmanager CM (Connection Manager), Short-Message-Relaisschicht SM-RL (SM Relay Layer) und Short-Message-Transferschicht SM-TL (SM Transfer Layer) sowie - auf Seiten des Endgerätes - Applikation (Application).

Die Protokollbeschreibungen der Schichten SM-TL, SM-RL und CM sind den ETSI-Dokumenten GSM03.40 [1] und GSM04.11 [3] zu entnehmen; siehe dazu das anliegende Normen-/Dokumentenverzeichnis.

Die Grundvoraussetzung zur Übertragung von Kurznachrichten (Short Messages) über das Festnetz PSTN ist eine Durchschaltvermittlung zwischen den beteiligten Einheiten (Telekommunikations-Endgeräte und Short-Message-Dienstzentrum). Es ist dann unerheblich, ob die Einheiten über ISDN oder eine analoge Schnittstelle angeschlossen sind.

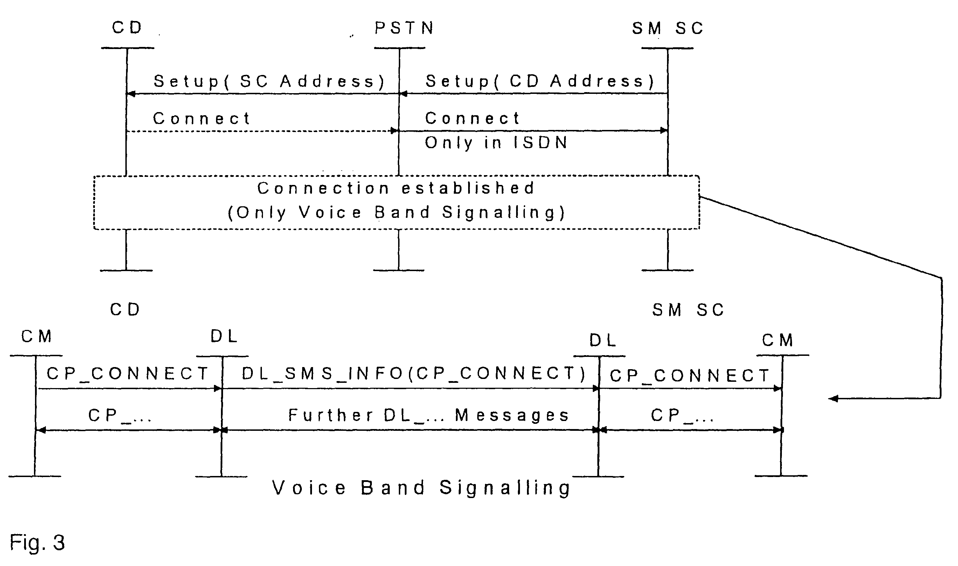

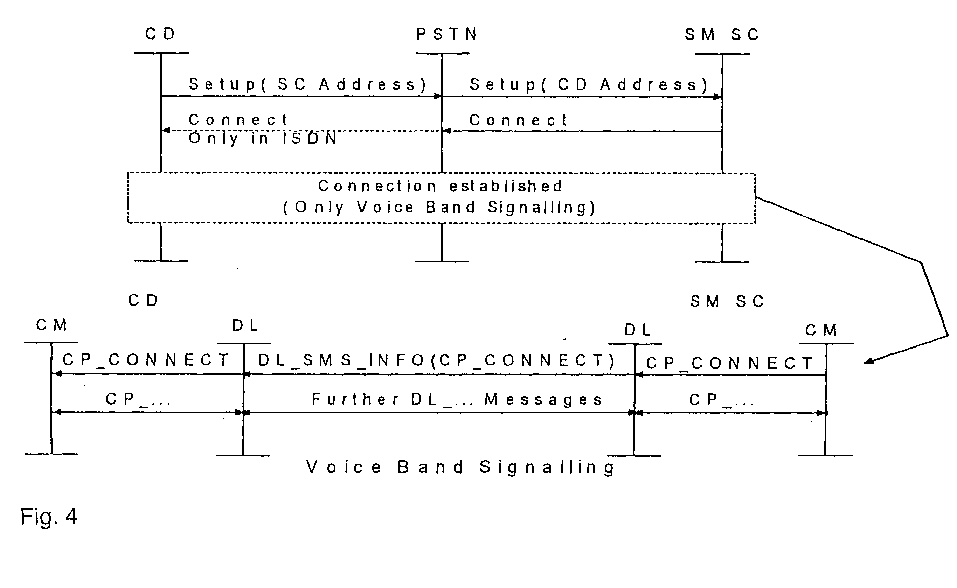

In den Figuren 3 und 4 ist schematisch der Aufbau einer Verbindung ausgehend von einem Telekommunikations-Endgerät (Fig. 3) bzw. ausgehend von dem Short-Message-Dienstzentrum (Fig. 4) dargestellt. Diese Diagramme sind für den Fachmann selbst erklärend und bedürfen daher hier keiner weiteren Erläuterung.

Im Falle eines ISDN-Netzes sind die Nachrichten (Messages) funktioneller Art und werden im ISDN-D-Kanal übertragen. Bei einem analogen Netz handelt es sich um Rufimpulse und Belegt-Signale. Nach Aufbau der Verbindung werden sämtliche Informationen zwischen den Einheiten per FSK-Signalisierung im Sprachband übertragen, speziell in Übereinstimmung mit den ETSI-Spezifikationen ETS 300 659-1 [4] und ETS 300 659-2 [5].

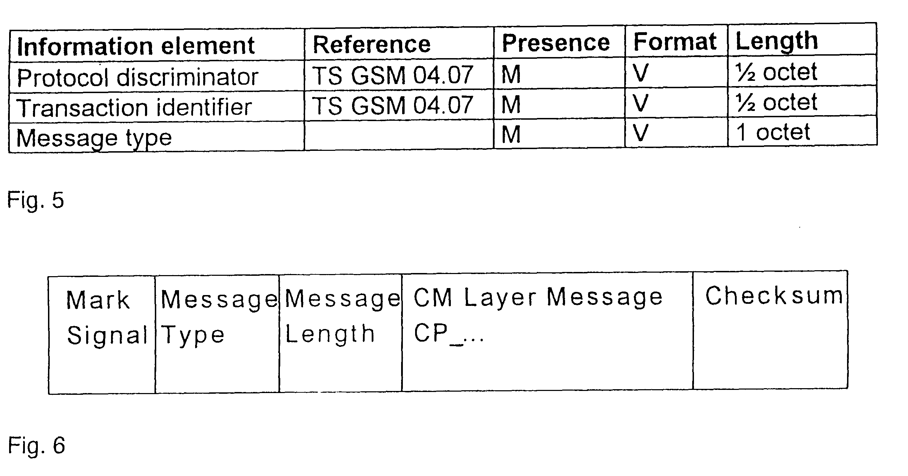

In Fig. 5 ist der Aufbau einer zusätzlichen Nachricht CP CONNECT gezeigt, die zur Benachrichtigung der rufenden Einheit seitens der angerufenen Einheit über den Aufbau der Verbindung dient. Diese Benachrichtigung ist erforderlich, um die Abläufe in der CM-Schicht in Gang zu setzen. Die Nachrichtenartkodierung ist: 0x40 0100 0000B, und das Format folgt GSM04.7/Kapitel 11 [2].

Die Schicht DL ermöglicht dem Verbindungsmanager (Schicht CM) die Absendung und den Empfang von Nachrichten mit der Partner-Einheit, sie stellt die Bitfehlererfassung bereit und realisiert für eine Nachricht in der Schicht CM ein Ankündigungssignal (Mark Signal).

In Fig. 6 ist das Format einer Nachricht in der Datenverbindungs-Schicht dargestellt. Das Feld "Mark Signal" besteht aus einem Block von 80 ± 25 Bit. Das Feld "Message Type" umfaßt ein Oktett und enthält ein binär kodierte Identifizierungs-Kennzahl für die Nachricht. Die Kodierung für einen DL_SMS_INFO Message Type ist: 011H 0001 0001B. Die Kodierung für einen DL_SMS_ERROR Message Type ist: 012H 0001 0010 B.

Das Feld "Message Length" umfaßt ein Oktett und enthält die binär kodierte Anzahl von Oktetts der Nachricht (unter Ausnahme der Oktetts des Message Type, der Message Length und der Checksum). Insgesamt ist eine Nachrichtenlänge bis zu 255 Oktetts erlaubt. Das Feld "Checksum" umfaßt ein Oktett und enthält die beiden Komplemente der Summe aller Oktetts in der Nachricht, beginnend vom "Message Type"-Oktett bis zum Ende, modulo 256.

Im Falle eines Prüfsummen-Fehlers sendet die Datenverbindungs-Schicht der empfangenden Einheit eine Nachricht des Typs "DL_SMS_ERROR" an die (ursprünglich) sendende Einheit. In dieser Nachricht ist das Datenfeld leer und die Nachrichtenlänge (Message Length) auf Null gesetzt. Die Datenverbindungs-Schicht der sendenden Einheit hat daraufhin die letzte gesendete Nachricht zu wiederholen.

Zur physikalischen Schicht ist noch anzumerken, daß im Falle einer FSK-Signalisierung eine Halbduplex-1200-Baud-Modulation eingesetzt werden kann. Im Falle einer DTMF-Signalisierung wird jedes Oktett einer Nachricht in der Datenverbindungs-Schicht in das höhere (obere) und niedere (untere) Halbbyte aufgeteilt. Jedes Halbbyte wird mit einem DTMF-Bit kodiert. Zuerst wird das obere Halbbyte gesendet und dann das untere. Im Falle der DTMF-Signalisierung wird das Ankündigungssignal der DL-Nachricht weggelassen.

Hinsichtlich der Signalisierungsmethode bestehen diverse Kombinationsmöglichkeiten; im Normalfall wird im Telekommunikations-Endgerät eine Auswahl fest installiert, die dann vom Nutzer nicht mehr zu verändern ist.

## Patentansprüche

1. Verfahren zur Übermittlung einer Nachricht von einem ersten zu einem zweiten Telekommunikations-Endgerät (CD), von denen mindestens eines an ein leitungsgebundenes Telefonnetz (PSTN) angeschlossen ist,
**dadurch gekennzeichnet,** daß
- die Nachricht als Kurznachricht, insbesondere über eine Eingabetastatur oder einen Touch-Screen, am ersten Telekommunikations-Endgerät eingegeben,
- die Kurznachricht in das Short-Message-Format gebracht,
- über eine adäquat spezifizierte Datenverbindungs-Schicht (DL) ein logischer Verbindungsaufbau realisiert,
- die Kurznachricht im Short-Message-Format in einer adäquat spezifizierten physikalischen Schicht über DTMF- oder FSK-Off-Hook-Signalisierung an ein Short-Message-Dienstzentrum (SMSC) und von diesem zum zweiten Telekommunikations-Endgerät übertragen und
- die vom Short-Message-Dienstzentrum erhaltene Kurznachricht im zweiten Telekommunikations-Endgerät in ein Ausgabeformat umgesetzt und, insbesondere auf einer Anzeigeeinheit, ausgegeben wird.

2. Telekommunikationssystem zur Durchführung des Verfahrens nach Anspruch 1, mit einem ersten und zweiten Telekommunikations-Endgerät (D) und einem leitungsgebundenen Telefonnetz (PSTN) , an das mindestens das erste oder zweite Telekommunikations-Endgerät angeschlossen ist,
**gekennzeichnet durch**
ein SMS-Übertragungsprotokoll, in dem eine Datenverbindungs-Schicht (DL) und eine physikalische Schicht spezifisch definiert sind, und
Mittel im ersten und zweiten Telekommunikations-Endgerät zur Implementierung des SMS-Übertragungsprotokolls zur Eingabe bzw. Ausgabe einer Kurznachricht.

3. Telekommunikationssystem nach Anspruch 2,
**dadurch gekennzeichnet,** daß
eines der Telekommunikations-Endgeräte an ein nach dem GSM- oder UMTS-Standard betriebenes Mobilfunknetz angeschlossen ist, wobei das leitungsgebundene Netz (PSTN) mit dem Mobilfunknetz über eine Gateway-Mobilvermittlungsstelle verbunden ist.

4. Telekommunikationssystem nach Anspruch 2 oder 3,
**dadurch gekennzeichnet,** daß
eines der Telekommunikations-Endgeräte ein Schnurlostelefon ist, welches über eine nach dem DECT-Standard betriebene Feststation oder Nebenstellenanlage an das leitungsgebundene Telefonnetz angeschlossen ist.

5. Telekommunikationssystem nach einem der Ansprüche 2 bis 4,
**gekennzeichnet durch**
ein Übertragungsprotokoll, in dem neben der Datenverbindungs-Schicht (DL) und der physikalischen Schicht eine Short-Message-Transferschicht (SM-TL) gemäß ETSI-Dokument GSM03.40, eine Short-Message-Relaisschicht (SM-RL) nach GSM03.40 und 04.11 sowie eine Verbindungsmanagement-Schicht (CM) nach GSM04.11 definiert sind.

6. Telekommunikationssystem nach Anspruch 5,
**dadurch gekennzeichnet,** daß
in der Verbindungsmanagement-Schicht (CM) eine zusätzliche Nachricht zur spezifischen Signalisierung des Verbindungszustandes an die rufende Einheit im Format nach GSM04.07/Kapitel 11 definiert ist.

7. Telekommunikationssystem nach einem der Ansprüche 2 bis 6,
**dadurch gekennzeichnet,** daß
das Format einer Nachricht in der Datenverbindungs-Schicht (DL) wie folgt definiert ist:
| | | | | |
|---|---|---|---|---|
| Mark Signal | Message Type | Message Length | CM Layer Message CP_... | Checksum |

8. Telekommunikationssystem nach einem der Ansprüche 2 bis 6,
**gekennzeichnet durch**
ein dem leitungsgebundenen Telefonnetz (PSTN) zugeordnetes Short-Message-Dienstzentrum (SMSC) zur Übermittlung von Kurznachrichten im Short-Message-Format.
